# EUROPEAN PATENT APPLICATION

(11) **EP 4 818 448 A1**
(43) Date of publication of application: **07.10.2026**
(21) Application number: 26169097.8
(22) Date of filing: 30.03.2026
(51) Int. Cl.: E05F 3/22

(54) **MOUNTING PLATE AND DOOR CLOSER**

(30) Priority: 04.04.2025 GB 202505081
(71) Applicant: Rutland Trading Co Ltd, Chesterfield S42 5US (GB)
(72) Inventor: Chow, Wing Sun, Chesterfield, S42 5US (GB); Ko, Ho Yin, Chesterfield, S42 5US (GB)
(74) Representative: Wilson Gunn

(57) **Abstract**

A mounting plate (11) for mounting a door closer (3) to a door (1). The mounting plate (11) comprising one, or more, thermally releasable fixation holes (20). Each thermally releasable fixation hole (20) comprises a bore in the mounting plate (11), a fixation insert (40) and a tubular sleeve (30). The sleeve (30) is radially nested within the bore and the fixation insert (40) is radially nested within the sleeve (30). The sleeve (30) has a lower melting point than the fixation insert (40) and/or mounting plate (11).

## Description

### Technical Field of the Invention

The present invention relates to a mounting plate for a door closer, in particular to a thermally releasable mounting plate for a closer for a fire protection door.

### Background to the Invention

Door closers are mounted to hinged doors to urge them towards a closed position. An existing type of door closer comprises an elongate rectangular mounting plate intended to be fixed towards the top of a door, with a long side parallel to the top of the door. The door closer is then in turn attached to the mounting plate.

To urge to door closed, the door closer is provided with an accumulator, typically a spring with a hydraulic dampener. The accumulator is connected to the door frame by a two pivotally connected arms which in turn are pivotally attached to the door frame via a bracket. When the door is opened, work is applied to the accumulator and is stored until the door is released at which time the door is urged closed.

In some instances the accumulator can contain flammable fluids, such as hydraulic fluid. In the event of a fire there is a risk of ignition of this fluid which is of particular concern when the door closer is used on a fire protection door. It is therefore seen as advantageous to provide a mechanism by which the door closer is detached from the door in the event of a fire, falling to the floor where temperatures are typically cooler.

EP4119757A1 attempts to address this with a two-part fastener. The fastener comprises a threaded base body with an unstable region configured to engage with a corresponding thread in a recess. To prevent the fastener being pulled from the recess a stabilising core is provided through the body. The core is comprised of a thermally activated shape-memory material. When sufficient heat is applied to the fastener (for example during a fire) the shape-memory properties of the core cause it to be withdrawn from the unstable region allowing the fastener to be withdrawn from the recess. This allows a door closer that is attached to the door fall away in the presence of a fire.

These fasteners are however complex, and an installer may accidentally replace them with a standard fastener, thereby preventing the door closer from detaching from the door. Furthermore, the presence of an unstable region may be a point of weakness, the door closer will be subject to many thousands of opening and closing cycles, the fasteners must therefore be mechanically robust.

The present invention seeks to provide an improved means of attaching a door closer to a door.

### Summary of the Invention

According to a first aspect of the invention there is provided a mounting plate, the mounting plate comprising one, or more, thermally releasable fixation holes; wherein each thermally releasable fixation hole comprises a bore in the mounting plate, a fixation insert and a tubular sleeve; wherein the sleeve is radially nested within the bore and the fixation insert is radially nested within the sleeve; wherein the sleeve has a lower melting point than the fixation insert and/or mounting plate.

Advantageously, the mounting plate can be attached to the door in the usual manner and the door closer attached to the fixation inserts on the mounting plate using standard fasteners which simplifies installation and produced a more mechanically robust fixture. In the event of a fire, the sleeve will melt, causing the door closer and fixation inserts to fall away.

The sleeve may have a melting point of less than 250 °C, preferably less than 225 °C, more preferably less than 200 °C, for example less than 190 °C. The sleeve may be comprised of a material having a melting point of less than 250 °C, preferably less than 225 °C, more preferably less than 200 °C, for example less than 190 °C.

The sleeve may be comprised of a plastics material. The sleeve may be comprised of Nylon, for example Nylon PA 12. Nylon advantageously provides a sufficient degree of mechanical retention to the fixation insert, whilst also having a melting point which allows the door closer to fall away in the event of a fire.

The tubular sleeve may have a radially inner face and a radially outer face. The distance between the readily inner and outer faces may define a sleeve wall thickness. The sleeve wall thickness may be at least 0.5 mm, preferably at least 0.75 mm, more preferably at least 0.9 mm, for example at least 1 mm.

The tubular sleeve may be provided with a collar. The collar may be provided on a radially outer face of the sleeve. The collar may project radially outward from the radially outer face of the sleeve.

The tubular sleeve may be sized to extend the entire depth of the bore. Where the bore extends through the mounting plate, the tubular sleeve may be sized to extend through the mounting plate.

The mounting plate may comprise one or more attachment holes. The attachment holes may be for attachment of the mounting plate to a door and/or door frame.

The fixation insert may have a radially inner face and a radially outer face. The radially outer face of the fixation insert may be provided with texturing.

The diameter of the outer face of the fixation insert may have a diameter at least 0.1 mm greater than the diameter of the radially inner face of the tubular sleeve. The diameter of the outer face of the fixation insert may have a diameter at least 0.2 mm greater than the diameter of the radially inner face of the tubular sleeve. The diameter of the outer face of the fixation insert may have a diameter at least 0.3 mm greater than the diameter of the radially inner face of the tubular sleeve.

The diameter of the outer face of the tubular sleeve may have a diameter at least 0.1 mm greater than the diameter of the radially inner face of the fixation hole. The diameter of the outer face of the tubular sleeve may have a diameter at least 0.2 mm greater than the diameter of the radially inner face of the fixation hole. The diameter of the outer face of the tubular sleeve may have a diameter at least 0.2 mm greater than the diameter of the radially inner face of the fixation hole.

The tubular sleeve may engage with the fixation hole with an interference fit. The fixation insert may engage with the tubular sleeve with an interference fit.

The fixation insert may be comprised of a metal. The fixation insert may be brass.

The mounting plate may be comprised of a metal. The mounting plate may be steel.

The bore in the mounting plate may comprise a first portion having a first diameter, and a second portion having a second, different diameter.

The tubular sleeve being provided with a collar projecting radially outward from a radially outer face of the sleeve.

According to a second aspect of the invention there is provided a door closer, the door closer comprising a biasing means and a first mounting plate, the mounting plate comprising one, or more, thermally releasable fixation holes; wherein each thermally releasable fixation hole comprises a bore in the mounting plate, a fixation insert and a tubular sleeve; wherein the sleeve is radially nested within the bore and the fixation insert is radially nested within the sleeve; wherein the sleeve has a lower melting point than the fixation insert and/or mounting plate.

The door closer may comprise a second mounting plate.

The door closer may comprise a door closer body. The door closer body may contain the biasing means. The door closer may further comprise an articulated arm. The articulated arm may be operably linked to the biasing means.

The first mounting plate may be configured to attach to the door closer body and to a door. The second mounting plate may be configured to attach to the articulated arm and a door frame.

According to a third aspect of the invention there is provided method of detaching a door closer, the door closer comprising a biasing means and a first mounting plate, the mounting plate comprising one, or more, thermally releasable fixation holes; wherein each thermally releasable fixation hole comprises a bore in the mounting plate, a fixation insert and a tubular sleeve; wherein the sleeve is radially nested within the bore and the fixation insert is radially nested within the sleeve; wherein the sleeve has a lower melting point than the fixation insert and/or mounting plate; the method comprising the tubular sleeve melting.

### Detailed Description of the Invention

In order that the invention may be more clearly understood one or more embodiments thereof will now be described, by way of example only, with reference to the accompanying drawings, of which:
- Figure 1: shows a cross-sectional view of a door closer mounted to a door with a mounting plate according to the present invention;
- Figure 2A: shows a perspective view of the mounting plate of Figure 1;
- Figure 2B: shows a cross-section of the mounting plate of Figure 2A along line A-A;
- Figure 3: shows a front and side view of the tubular sleeve of the mounting plate of Figure 1;
- Figure 4: shows a front and side view of the fixation insert of the mounting plate of Figure 1;
- Figure 5: shows a front view of an alternative mounting plate according to the present invention; and
- Figure 6: shows a cross-sectional view of the mounting plate of Figure 5 along line B-B.

In what follows the terms top, bottom, right and left sides, and similar terms refer to the apparatus in the orientation in which it is illustrated in the drawings by should not be taken to be otherwise limiting.

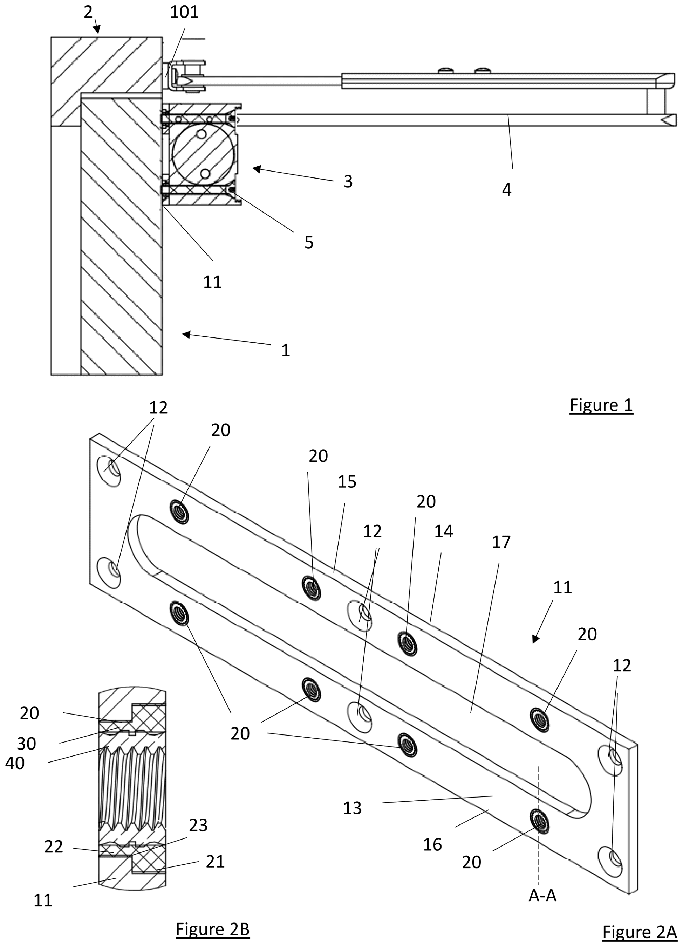

With reference to Figures 1 to 6 a door closer 3 comprising a mounting plate 11 according to the present invention is described.

As shown in Figure 1 the door closer 3 is mounted to both a door 1 and a frame 2 surrounding the door 1. The door closer 3 is of an overall rectangular shape and housing a mechanism for closing the door. The mechanism within is of a standard type know in the art and will not be described in detail. The door closer 3 is mounted to the door 1 via a mounting plate 11.

The mounting plate 11 is substantially rectangular and is provided with six countersunk holes 12 extending from a front face 13 of the mounting plate of a rear face 14 of the mounting plate. Four of the countersunk holes 12 are provided in the corners of the mounting plate with the remaining two being provided midway along the upper 15 and lower 16 edges. In the centre of the mounting plate a slot 17 is bored through the plate from the front to the rear face. The slot 17 has a stadium shape (a rectangle with two opposing semicircular ends), the slot 17 reduces the overall weight of the mounting plate 11.

The mounting plate 11 also comprises eight fixation holes 20. Four fixation holes 20 are equally spaced along the upper edge 15 of the mounting plate and four fixation holes 20 are equally spaced along the lower edge 16 of the mounting plate.

As best seen in Figure 2B, in the present embodiment the fixation holes 20 comprise a hole extending through the mounting plate 11. The fixation holes 20 comprise a first portion 21 adjacent to the front face 13 and a second portion 22 adjacent to the rear face 14. The first portion 21 has a larger diameter than the second portion 22 and the two are separated by a fixation hole step 23.

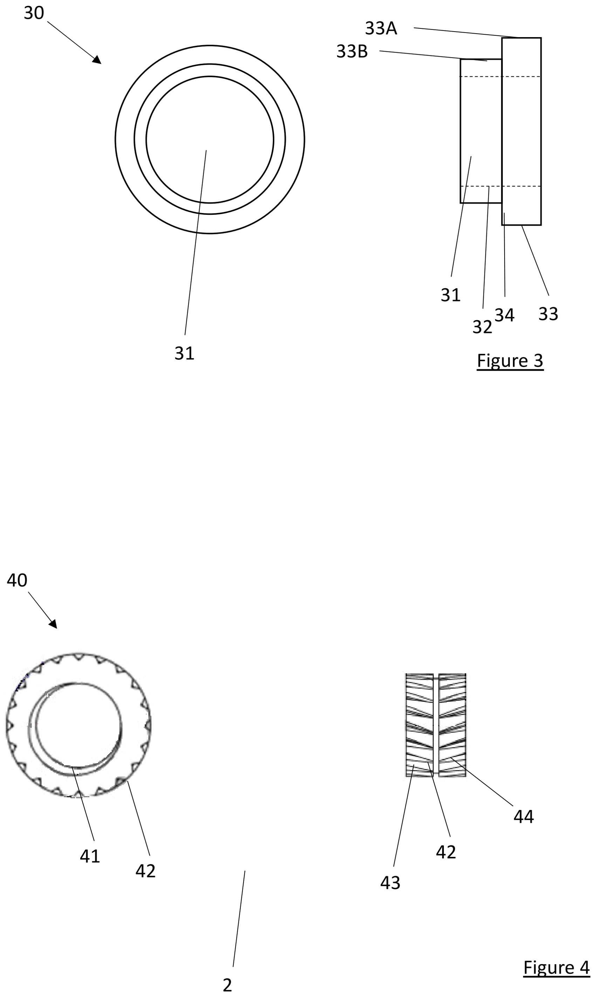

Radially nested within each fixation hole 20 is a tubular sleeve in the form of a grommet 30. In this embodiment the grommet 30 is formed of Nylon-12. With reference to Figure 3, the grommet 30 has an inner bore 31 extending therethrough the wall of the inner for forming a radially inner face 32 of the grommet 30. The grommet 30 also has a radially outer face 33 which is formed in two sections. The first section 33A has a first diameter and the second section 33B has a second smaller diameter, the two sections being separated by a grommet step 34.

Radially nested within each grommet 30 is a fixation insert 40. In this embodiment the fixation insert 40 is formed of brass. Each fixation insert 40 has a cylindrical shape with a threaded bore 41 extending between the two circular faces. On a radially outer face 42 of the fixation insert 40 a plurality of projections 43 are provided in a "V" shaped pattern to provide texturing 44.

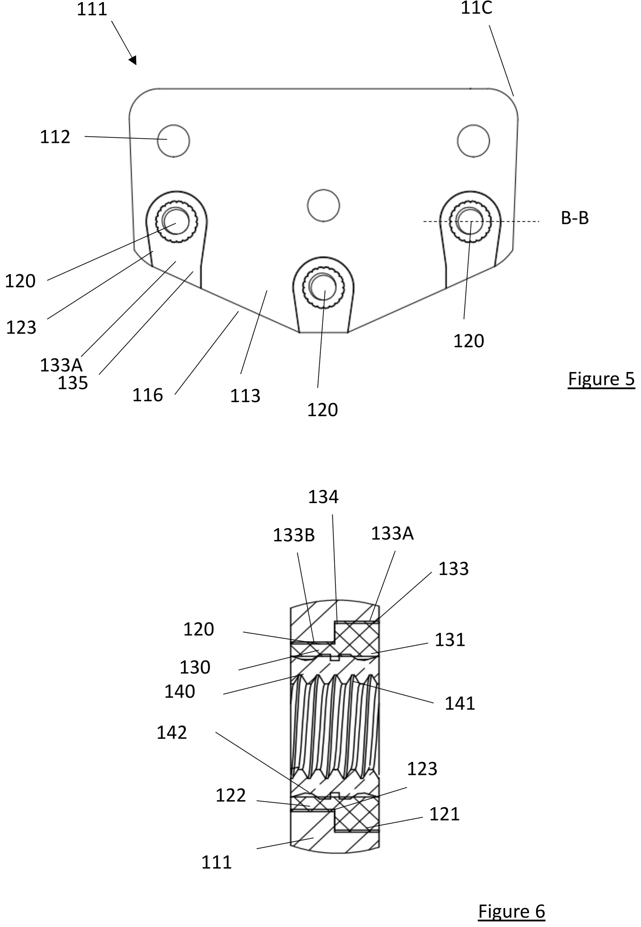

With reference to Figure 5 a second embodiment of the mounting plate 111 according to the present invention is described. Although the two mounting plates 11,111 have different shapes they have substantially similar features and as such like features are provided with the same numeral, advanced by 100.

The mounting plate 111 has a substantially rectangular shape with a tapered lower edge 116. Extending through the mounting plate 111 from a front face 113 to a rear face are three countersunk holes 112. The three countersunk holes 112 are arranged in the top corners and centre of the plate 111. In addition to the countersunk holes there are also three fixation holes 120 located in the bottom corners and the apex of the tapered lower edge 116.

As in the first embodiment, and shown in Figure 6, the fixation holes 120 comprise a hole extending through the mounting plate 111. The fixation holes 120 comprise a first portion 121 adjacent to the front face 113 and a second portion 122 adjacent to the rear face 114. The first portion 121 has a larger diameter than the second portion 122 and the two are separated by a step 123. As compared to the mounting plate 11 of the first embodiment, the first portion 121 further comprises a groove 123 extending to the lower edge 116 of the plate 111.

Radially nested within each fixation hole 120 is a tubular sleeve in the form of a grommet 130. In this embodiment the grommet 130 is formed of Nylon-12. With reference to Figure 6, the grommet 130 has an inner bore 131 extending therethrough the wall of the inner bore forming a radially inner face 132 of the grommet 130. The grommet 130 also has a radially outer face 133 which is formed in two sections. The first section 133A has a first diameter and the second section 133B has a second smaller diameter, the two sections being separated by a grommet step 134. As compared to the first embodiment the first section 133A does not have a cylindrical outer profile, a further flange 135 is provided to correspond to the profile of the groove 123 in the fixation holes 120.

Radially nested within each grommet 130 is a fixation insert 140. In this embodiment the fixation insert 130 is formed of brass. Each fixation insert 140 has a cylindrical shape with a threaded bore 141 extending between the two circular faces. On a radially outer face 142 of the fixation insert 140 a plurality of projections 143 are provided in a "V" shaped pattern to provide texturing.

As noted above, the grommets 30 are radially nested within the fixation holes 20. The grommets are inserted until the grommet step 34 abuts the fixation hole step 23 which ensures that the grommet 30 is fully inserted. In this example both sections of the radially outer face 33 of the grommet 30 has a diameter 0.2 mm greater than the corresponding portion of the fixation hole 20. In this case, the first portion of the fixation hole 21 has a diameter of 10 mm whereas the first section 33A of the grommet has a diameter of 10.2 mm, the second portion 22 of the fixation hole has a diameter of 8 mm whereas the second section 33B has a diameter of 8.2 mm. this oversizing of the grommet 30 provides an interference fit which holds grommet 30 securely in place within the fixation hole 20.

In a similar manner the radially outer diameter of the fixation insert 40 is 0.2 mm greater than the diameter on the inner bore 31 of the grommet (having an outer diameter of 7 mm as compared to the inner bore diameter of 6.8 mm). In combination with the texturing 44 of the fixation insert this results in a strong interference fit between the fixation insert 40 and the grommet 30. Furthermore, it further compresses the grommet increasing the engagement between the grommet 30 and the fixation hole 20. As will be appreciated by those skilled in the art, the specific measurements above are but an example, the degree of oversizing could be increased or decreased and the interference fit could be complimented with further features such as texturing on the inner face of the fixation holes 20 or the provision of an adhesive between the grommet 30 and fixation hole 20 and/or fixation insert 40.

With reference to Figure 1, in use a mounting plate 11 according to the first embodiment is attached to a door 1 through the countersunk holes 12 using fixings of a type known in the art, for example screws. The door closer 3 can then be mounted on the mounting plate 11 using bolts which engage with the threaded inner bore 41 of the fixation inserts 40. Due to the interference fits between the fixation insert 40 and the grommet 30 and between the grommet 30 and the fixation hole 20, the bolt does not spin the fixation insert 40 and instead a secure mounting of the door closer 3 to the door 11 is provided.

The mounting plate 111 according to the second embodiment is attached to the door frame 2 through the countersunk holes 112 using fixings of a type known in the art, for example screws. The door closer linkage 4 is then connected to the mounting plate 111 with bolts into the threaded bore 141 of the fixation insert 140.

During routine usage the door closer 3 returns the door 1 to a closed position and the interference fit between the grommet 30 and fixation hole 20, and grommet 30 and fixation insert 40 ensures that the door closer 3 remains securely in place over hundreds, or thousands of operation cycles.

However, in the event of a fire the mounting plates 11,111 will heat up and in time the grommets 30,130 will melt once they reach the melting point of Nylon-12 at approximately 180 °C. Without the grommets 30,130 the fixation inserts will become loose within the fixation holes 20,120 and the door closer 3 and door closer linkage 4 will become detached from their respective mounting plates 11,111 and the door closer will fall to the floor where the temperature is lower thereby reducing the risk of a catastrophic failure in the door closer mechanism.

The one or more embodiments are described above by way of example only. Many variations are possible without departing from the scope of protection afforded by the appended claims.

## Claims

1. A mounting plate, the mounting plate comprising one, or more, thermally releasable fixation holes; wherein each thermally releasable fixation hole comprises a bore in the mounting plate, a fixation insert and a tubular sleeve; wherein the sleeve is radially nested within the bore and the fixation insert is radially nested within the sleeve; wherein the sleeve has a lower melting point than the fixation insert and/or mounting plate.

2. A mounting plate according to claim 1, wherein the sleeve has a melting point of less than 200 °C.

3. A mounting plate according to claim 1 or 2, wherein the sleeve is comprised of a plastics material.

4. A mounting plate according to any preceding claim, wherein the tubular sleeve has a radially inner face and a radially outer face, the distance between the radially inner and outer faces defining a sleeve wall thickness, wherein the sleeve wall thickness may be at least 0.5 mm.

5. A mounting plate according to any preceding claim, wherein the tubular sleeve is sized to extend the entire depth of the bore.

6. A mounting plate according to any preceding claim, wherein a radially outer face of the fixation insert is provided with texturing.

7. A mounting plate according to any preceding claim, wherein a radially outer face of the fixation insert has a diameter greater than the diameter of the radially inner face of the tubular sleeve.

8. A mounting plate according to claim 7 wherein the diameter of the outer face of the fixation insert has a diameter at least 0.2 mm greater than the diameter of the radially inner face of the tubular sleeve.

9. A mounting plate according to any preceding claim wherein the fixation insert and tubular sleeve engage with an interference fit.

10. A mounting plate according to any preceding claim wherein the tubular sleeve and fixation hole engage with an interference fit.

11. A mounting plate according to any preceding claim, wherein the fixation insert is comprised of a metal.

12. A mounting plate according to any preceding claim, wherein the bore in the mounting plate comprises a first portion having a first diameter, and a second portion having a second, different diameter; the tubular sleeve being provided with a collar projecting radially outward from a radially outer face of the sleeve.

13. A door closer, the door closer comprising a biasing means and a mounting plate, the mounting plate comprising one, or more, thermally releasable fixation holes; wherein each thermally releasable fixation hole comprises a bore in the mounting plate, a fixation insert and a tubular sleeve; wherein the sleeve is radially nested within the bore and the fixation insert is radially nested within the sleeve; wherein the sleeve has a lower melting point than the fixation insert and/or mounting plate.
